# EUROPEAN PATENT SPECIFICATION

(11) **EP 4 281 673 B1**
(45) Date of publication and mention of the grant of the patent: **23.04.2025**
(21) Application number: 22705881.5
(22) Date of filing: 20.01.2022
(51) Int. Cl.: F16B 12/32, F16B 7/20, F16B 12/44

(54) **CONNECTION SYSTEM FOR METALLIC STRUCTURES AND ASSEMBLING METHOD THEREOF**
VERBINDUNGSSYSTEM FÜR METALLSTRUKTUREN UND MONTAGEVERFAHREN DAFÜR
SYSTÈME DE LIAISONS POUR STRUCTURES MÉTALLIQUES ET PROCÉDÉ ASSOCIÉ D'ASSEMBLAGE

(30) Priority: 20.01.2021 PT 2021117022; 17.09.2021 PT 2021117469
(43) Date of publication of application: 29.11.2023
(73) Proprietor: Naudek, LDA, 4710-133 Braga (PT)
(72) Inventor: PINHEIRO GUIMARÃES, Ricardo Bruno, 4710-133 Braga (PT); MONTEIRO DANTAS SILVA PEREIRA, Rui Pedro, 4715-302 Braga (PT)
(74) Representative: Patentree
(86) International application number: PCT/IB2022/050482
(87) International publication number: WO 2022/157665

(56) References cited:
- CN-U- 206 129 805
- DE-U1- 202018 106 526

## Description

### TECHNICAL FIELD

The present description concerns a connection system. In particular, the present description refers to a connection system for metallic structures, among others, used in the construction of furniture and which does not require special tools. The present solution is preferably directed to the furniture sector.

### BACKGROUND

Frame systems, such as bookcases, are systems that are built by means of connecting elements. There are quite frequently physical limitations of various kinds, often insurmountable, resulting directly from the constructive characteristics of buildings and that prevent the movement of structures (including furniture) of large dimensions when they are physically monolithic. There are also great difficulties and high costs associated with carrying out the geographical movement of these same structures. Furthermore, in different uses, the structures only need to be assembled for a short time. These reasons, standing out herein as being the main ones although not the only ones, lead to a real need for the existence of structures capable of being quickly assembled and disassembled. However, it is necessary to guarantee its solid structural cohesion because it is essential to guarantee its robustness, stability and, most importantly, the safety of people and goods.

EP1030066 A1 describes a releasable clamping connection for a strut arrangement made of tubing, having a preferably squared cross section, and that comprises a connecting element with different configuration and a tube of complementary dimensions. The tubing of the squared cross section structure are joined at the ends by corner parts or connectors with pegs extending 90 degrees to each other. The pegs are cylindrical, with a pattern of planes that allow the structure tubes to be easily fitted and removed when rotated 45 degrees. There is a pattern of ridges and grooves that allow the peg to attach to the inside of the tube. DE 20 2018 106526 U1 discloses a connection system comprising at least one vertex cubic connector, at least one socket with a cavity for receiving a stud of said connector.

These facts are described in order to illustrate the technical problem solved by the embodiments of the present document.

### GENERAL DESCRIPTION

The present description concerns a connection system between rods, preferably for the furniture sector, namely for the assembly of bookcases, cabinets and tables, among others. Preferably, the rods are metallic.

The connection system comprises a vertex cubic connector which is a cubic central body, which can comprise one to six studs forming a monolithic set with the central body, and there can only be one stud on each of the faces of the vertex cubic connector. The studs are positioned with their longitudinal axis perpendicular to the faces of the vertex cubic connector, and their longitudinal axis intersects each face at its center point. Each stud comprises, at its end opposite the area connecting to the vertex cubic connector, four pins, of equal dimensions, perpendicular to the stud axis and spaced 90° apart.

The connection system is also formed by a socket, which is inserted inside a rod, together with a vertex cubic connector, optionally designated as male connector, which is later coupled to the socket. The system of socket and vertex cubic connector is constituted as a physical metallic connection. No tools are needed to attach or detach the vertex cubic connector to a socket, the engaging and disengaging thereof being completely manual. This metallic connection system is preferably intended for large dimension applications or that may require one or more assemblies and disassemblies of the rod-socket and vertex cubic connector assembly, keeping intact the physical and functional integrity of these parts, and thus, of the connection system as a whole. The socket can be manufactured, for example, by molding, sintering or machining.

The connection system, in its most basic dimension, comprises at least a coupling of a rod, a tube, a stem, among others, by means of an angled cubic connector and a socket. The most complex system can be composed by several couplings, between several rods, using several sockets and vertex cubic connectors which connected to each other, make the total structure physically and mechanically solidary. In the present description, a hollow rod, hollow tube, or hollow stem are interchangeably used.

As the socket and the vertex cubic connector are 100% metallic, monolithic and compact parts, without any other associated component, they make the connection highly robust and highly stable over time, as it is not liable to suffer any wear, deformation or deterioration effects in assembly and disassembly processes, when used under the conditions for which it was designed.

The socket and the vertex cubic connector are parts that can be produced using different metal alloys with different chemical compositions. The production of system components in polymer materials can significantly reduce the durability, robustness, mechanical strength and reliability of the connection, and their mechanical response may deteriorate significantly, or become unfeasible, when in the presence of assemblies and disassemblies of the connection.

In the connection system, the socket is fully housed inside the rod with a cavity, or interchangeably, inside the tube, and the insertion thereof will take place by a translational movement inside the tube caused by application of pressure on the longitudinal axis on the socket. Fastening the socket to the inner walls of the rod occurs by mechanical interference. The vertex cubic connector is later manually coupled into the socket, traversing by translation, in a first step, some longitudinal channels built in the inner area of the socket, until there is a physical abutment between the cube face of the vertex cubic connector and the top of the socket and the rod.

In a second step, only possible after the aforementioned abutment, the vertex cubic connector or the rod must rotate 45° about the axis of the vertex cubic connector stud, the connector being locked and housed in its fastening position inside the socket.

In one embodiment, on the outer surface of the socket, more specifically on the surface opposite to that which will be in contact with the cube face of the vertex cubic connector - end (A) - there are chamfers on the four sides with the aim of making a more accurate pre-positioning of the socket in its insertion position relative to the position of the tube. This step should occur before starting the translational movement of the socket into the tube.

In one embodiment, still on the outer surface of the socket, the four outer longitudinal vertices comprise chamfers, in order to allow the insertion thereof in the tube to be done without facing potential physical obstacles caused by dimensional variations in the radius of the internal vertices of the tubes. In this way, an adequate use of a wide variety of tubes from different origins and production processes is ensured, since the insertion will take place without causing any deterioration or mechanical deformation of the set caused by this natural and usual variation in the tubes.

The outer longitudinal side surfaces of the socket comprise one or more notches - a mixture of depressions and high relief ribs - arranged longitudinally, in order to allow the system to mechanically absorb, on the one hand, dimensional variations in the thickness of the internal wall of the tube along the path that the socket will travel inside thereof, and on the other hand, the obstacle caused by the high relief and positioning of the internal weld of the tube, directly resulting from its production process. This geometry also simultaneously provides sufficient contact surface area to guarantee the necessary interference between the outer wall of the socket and the inner wall of the tube, thus eliminating their unintentional relative translational displacement.

In one embodiment, the socket comprises an excavated area embedded in the compact body of the socket itself, which will house the pins of the vertex cubic connector studs after its full longitudinal engagement with the socket. The excavated area is not necessarily obtained by excavation, it can be formed in recess from the start. The excavated area of the socket comprises bearing surfaces and grooves to receive the pins of the protrusion of the vertex cubic connector. In the excavated area, adjacent to each of the grooves of the socket, there are bearing surfaces in a plane perpendicular to said grooves, which in a proportion of their dimension, are preferably smooth flat surfaces which, after rotation of the vertex cubic connector with respect to the axis of its stud, will stop the translational output movement of the vertex cubic connector from the inside of the socket. The bearing surfaces comprise stops that obstruct the free rotation of the pins, preventing a rotation greater than 45° in relation to the axis of its stud, thus preventing the vertex cubic connector from being misaligned with the rod. The flat areas of the bearing surfaces are followed by high relief protrusions, which during the rotational movement of the vertex cubic connector about its axis will be overcome by pressure. The protrusions are followed by low relief recesses that will serve as a stationary housing for the pins of the vertex cubic connector stud. Following the low relief recess will be the stop to obstruct rotation of the pins beyond 45°. This ensures, with the set formed by protrusions, low relief recesses and stops, a rotational locking between the vertex cubic connector and the socket under normal conditions and forces of use of the system.

According to the invention, the rotational locking between vertex cubic connector and the socket is ensured by one or more sets of a ball and a spring arranged radially, or axially, or radially and axially to compress the ball against a pin of the vertex cubic connector to retain the pin after/when the pin passes through the ball, in order to stop the rotation of the connector relative to the socket. The axial direction refers to the longitudinal axis of the rod and the longitudinal axis of the stud, which are substantially parallel. The radial direction refers to a direction radiating from said longitudinal axis.

In one embodiment, the rotational locking between the vertex cubic connector and the socket, is obtained by incorporating metallic balls, in particular in replacement and in the same location as the high relief protrusions. The socket comprises one or more sets formed by a locking ball and a spring arranged to be compressed by the action of the ball, and a bearing for supporting the spring. Each ball can be attached to a low relief, which reinforces the interlocking between the pieces. The balls, preferably made of metal, have the same function as the high relief protrusions, thus forming an alternative set composed of balls, low relief recesses and stops, for locking the system. In one embodiment, the socket comprises internal holes, grooves or slots (axially or radially arranged) for receiving the locking balls and springs, the springs being supported on a bearing. When inserting the vertex cubic connector into the socket, the vertex cubic connector is inserted until the central body touches the bearing. Subsequently, the rotation begins wherein the pins of the vertex cubic connector cause the axial (or radial, depending on the embodiment) lifting of the balls, which compress the spring, increasing the pressure exerted by the springs, thus allowing the stud pins to pass into the housing area. When the stud pins are already in abutment with the stop and in the housing area, the balls recover (partially or completely) their initial position and stop the rotation.

According to the invention, the socket comprises balls arranged radially on the longitudinal side surfaces of the socket, acting directly on the stud of the vertex cubic connector. The socket further comprises a locking spring arranged to compress by the action of the ball when the vertex cubic connector stud is inserted into the socket. During the longitudinal entry of the vertex cubic connector into the socket, and the passage of its stud through the longitudinal channel built in the inner zone of the socket body, the balls radially arranged compress the spring, increasing the spring pressure. After 45° total rotation of the vertex cubic connector in relation to the socket, that is, when the stud pins are already in their housing area, the balls radially arranged are located in the stud cavities specifically positioned, and recover their initial position (partially or completely) thus complementing the rotational and longitudinal locking.

In one embodiment, on the inner top - end (B) - of the socket, more specifically on the end that is in contact with the cubic face of the vertex cubic connector, there are chamfers on the four sides in the outer-inner direction, which lead and make it easier to position the stud and corresponding pins of the vertex cubic connector at the inlet of the socket.

Inside the socket, between top A and top B, a cavity is built with grooves that are of uniform dimensions longitudinally and act as counterparts of the vertex cubic connector stud and respective pins. These longitudinal grooves serve as guides for the stud in the central channel, that is, in the cavity, and for the pins in the four adjacent side grooves, during the translational movement of the vertex cubic connector on the socket during the coupling phase between them. The grooves terminate in bearing surfaces to hold the pins when the stud is rotated relative to the socket. The central channel, i.e., the cavity, will also house, in a stationary situation of the system, more than 80% of the vertex cubic connector stud, providing contact between the compact stud of the vertex cubic connector and the compact wall of the socket, absorbing this way the existing flexures under normal use conditions. In a stationary situation, and after a 45° rotation, the transverse pins located at the end of the stud, will be housed in the bearing surfaces of the grooves, preferably in the low relief recess located between the stop and the protrusion, located on the bearing surfaces, which in turn are located at the end of the grooves of the socket at its end A.

The present description relates to a connection system comprising at least one vertex cubic connector comprising the features according to claim 1.

The direct abutment between the cube face of the cubic connector and the end of the rod allows a very robust fit resistant to clearances and loosening, especially when these parts are metallic.

Preferably, said socket comprises one or more longitudinal notches for direct and continuous contact with said hollow, along said socket. The direct and continuous longitudinal abutment of surfaces of the socket and the rod hollow (or rod or stem cavity, or tube hollow, interchangeably) allows a very robust fit resistant to clearances and loosening, especially when these parts are metallic.

In one embodiment, the stud is cylindrical.

In one embodiment, the rods are hollow tubes or solid rods with hollow ends for receiving said socket.

In one embodiment, said socket comprises one or more longitudinal notches for direct and continuous contact with said hollow, along said socket.

Optionally, the bearing surface comprises a flat surface, which is followed by a protrusion, which is followed by a recess to retain the respective pin after it has passed through the protrusion. The recess is followed by a stop for preventing the respective pin from progressing after the recess. Simultaneously, the protrusion, recess and stop ensure the perfect alignment between the entire connection system.

In one embodiment, the cavity is a hole through the socket.

In one embodiment, the stud comprises two studs, preferably three studs, more preferably four studs.

In one embodiment, the vertex cubic connector is a monolithic component.

In one embodiment, the socket is a monolithic component.

In one embodiment, the socket and the vertex cubic connector are made of metal.

In one embodiment, the rod, the socket and the vertex cubic connector are made of metal.

In one embodiment, the metal is selected from the following list: zamak - zinc alloy (Zn), together with aluminum (Al), magnesium (Mg) and copper (Cu) -, aluminum, steel, or combinations thereof.

Other suitable materials, with compatible stiffness and elasticity, may be used.

In one embodiment, the cubic connector is for a joining apex of two rods at 90° or 180° to each other and said cubic connector comprises two studs at 90° or 180° to each other, each of which protrudes from a respective cube face of said cubic connector.

In one embodiment, the cubic connector is for a joining apex of three rods at 90° to each other and said cubic connector comprises three studs at 90° to each other, each of which protrudes from a respective cube face of said cubic connector.

In one embodiment, the cubic connector is for a joining apex of four rods at 90° to each other and said cubic connector comprises four studs at 90° to each other, each of which protrudes from a respective cube face of said cubic connector.

In one embodiment, the cubic connector is for a joining apex of five rods at 90° to each other and said cubic connector comprises five studs at 90° to each other, each of which protrudes from a respective cube face of said cubic connector.

In one embodiment, the cubic connector is for a joining apex of six rods at 90° to each other and said cubic connector comprises six studs at 90° to each other, each of which protrudes from a respective cube face of said cubic connector.

The present disclosure further relates to a method of assembling the connection system according to the preceding claims, comprising the following steps:
inserting the socket translationally into a rod with a hollow at one end of the rod and fasten said socket;
inserting the cubic connector stud into the cavity of the socket and the pins into the longitudinal grooves of said cavity of the socket;
abutting the cube face of the cubic connector on the socket and rotating to fasten the cubic connector.

In one embodiment, the cubic connector rotates 45°.

The present disclosure further relates to the structure comprising the connection system described above.

In one embodiment, the structure is a furniture article.

In one embodiment, the structure is a bookcase, a table or a cabinet.

In one embodiment, the structure is able to be assembled and disassembled.

### BRIEF DESCRIPTION OF THE DRAWINGS

For an easier understanding, figures are herein attached, which represent preferred embodiments which are not intended to limit the object of the present description:
**Figure 1****:** Schematic representation of an embodiment of a rod according to the disclosure.
**Figure 2****:** Schematic representation of an embodiment of the disclosed socket.
**Figure** 3: Schematic representation of an embodiment of the vertex cubic connector according to the disclosure.
**Figure 4****:** Schematic representation of an embodiment of the insertion of the socket inside a rod according to the disclosure.
**Figure 5****:** Schematic representation of an embodiment of the insertion of the socket inside a rod according to the disclosure.
**Figure 6****:** Schematic representation of an embodiment of the socket inserted inside the rod according to the disclosure.
**Figure 7****:** Schematic representation of an embodiment of the second component inserted inside the rod.
**Figure 8****:** Schematic representation of an embodiment of the vertex cubic connector to be coupled to the socket.
**Figure 9****:** Schematic representation of an embodiment of the vertex cubic connector to be coupled to the socket.
**Figure 10****:** Schematic representation of an embodiment of the vertex cubic connector coupled to the socket.
**Figure 11****:** Schematic representation of an embodiment of the disclosed socket.
**Figure 12****:** Sectional view of an embodiment of the system on the disclosed rod.
**Figure 13****:** Schematic representation of several embodiments of the vertex cubic connector, wherein (a) comprises three studs, (b) comprises four studs, (c) comprises two studs and (d) comprises four studs.
**Figure 14****:** Schematic representation of embodiments of furniture with the system.
**Figure 15****:** Schematic representation of an embodiment of the vertex cubic connector to be coupled to the socket by means of balls and springs, with openings for receiving spring and ball.
**Figure 16****:** Sectional view of an embodiment of the system with the balls, with axial openings for receiving spring and ball.
**Figure 17****:** Schematic representation of an embodiment of the insertion of the socket inside a rod.
**Figure 18****:** Sectional view of an embodiment of the system with the balls, with radial openings for receiving spring and ball.
**Figure 19****:** Schematic exploded view of an embodiment of the vertex cubic connector and socket, with radial and axial openings for receiving spring and ball.
**Figure 20****:** Schematic representation of an embodiment of the socket with openings for receiving spring and ball.
**Figure 21****:** Side view of an embodiment of the socket with openings for receiving spring and ball.
**Figure 22****:** Schematic representation of an embodiment of the system inserted inside the rod, with radial hole (21) for receiving spring and ball, and axial hole (22) for receiving spring and ball.

### DETAILED DESCRIPTION

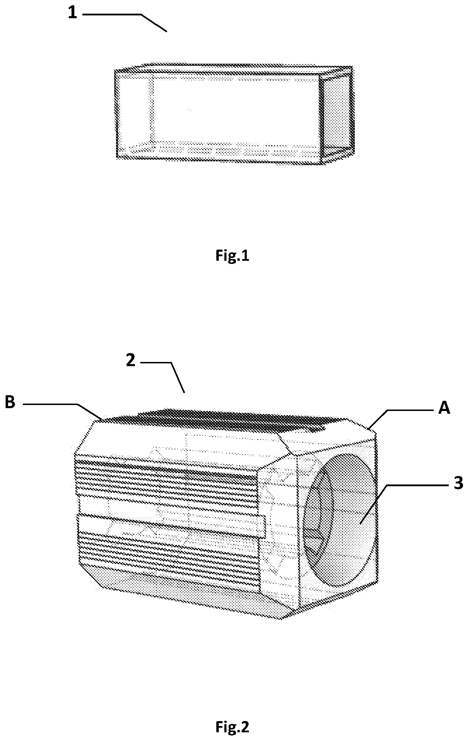

In a preferred embodiment, the present description refers to a metallic connection system used between tubes, or interchangeably, rods or stems, all equally metallic, comprising a component designated as socket (2) that is inserted inside a tube or stem (1), and an vertex cubic connector (4) which is subsequently coupled to the socket. The set is constituted as a physical metallic connection. Figure 1 is an embodiment of a rod with a hollow at one end of the rod, which is preferably a hollow tube.

According to the present description, the connection system does not require additional tools to couple the vertex cubic connector to the socket, the fitting between the socket and the vertex cubic connector being made completely manually.

The system is preferably intended for applications that may require one or more assemblies and disassemblies of the vertex cubic connector - socket set during its useful life, keeping intact the physical and functional integrity of the parts that constitute the system.

In a preferred embodiment, the socket and the vertex cubic connector are 100% metallic, monolithic and compact, without any associated component, making the connection highly robust and stable over time, as it is not liable to suffer any wear, deformation or deterioration effects under normal use conditions.

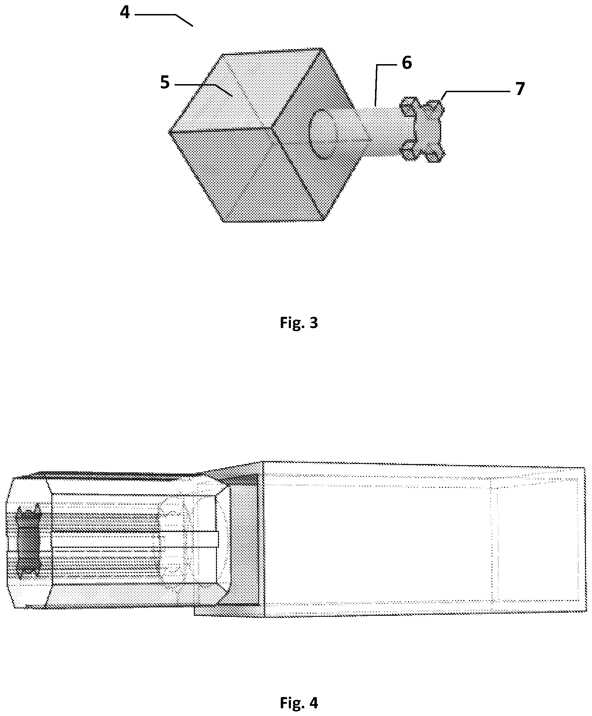

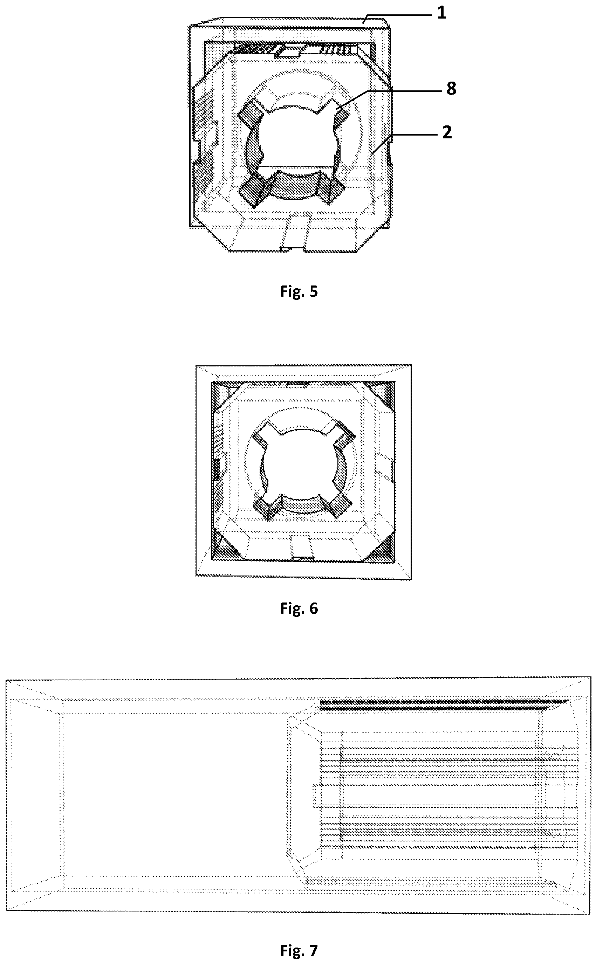

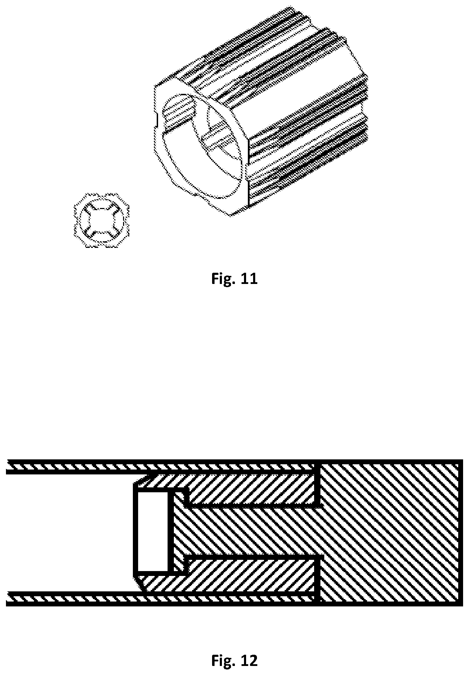

In a preferred embodiment, the socket (2) shown in Figure 2 and Figure 11 is inserted inside the tube (1) and its introduction into the tube will take place by pressure. Its fastening to the inner walls of the tube occurs by mechanical interference, as shown in Figure 4, Figure 5, Figure 6 and Figure 7.

In one embodiment, and as shown in Figure 2 and Figure 11, on the outer surface of the outer side of the socket, more specifically at the end (A) - more specifically at the end opposite to that in contact with the cube face (5) of the vertex cubic connector (4), the excavated area (3) being visible, there are chamfers on the surface of its four sides in order to facilitate a precise positioning of the socket in the correct position in relation to the tube, even before starting the translational movement of the socket on the inside of the tube.

In a preferred embodiment, on the outer side of the socket, more specifically on its four outer vertices, there are chamfers in the longitudinal direction in order to allow the insertion thereof into the tube without facing potential physical obstacles caused by dimensional variations of the radius of the inner corners of the tubes. This way guarantees the use of a great diversity of tubes from different origins and production processes, since the insertion will take place without causing any deterioration or mechanical deformation of the assembly caused by the natural variation of the tube radii.

In one embodiment, the outer surfaces of the socket (2) comprise a plurality of longitudinal notches - a mixture of depressions and longitudinal high relief ribs - in order to allow the system to mechanically absorb dimensional variations in the thickness of the inner wall of the tube along the path made by the socket inside the tube. On the other hand, it also allows to absorb and overcome the obstacle eventually caused by the high relief and positioning of the weld directly resulting from the production process of the tube itself. At the same time, it provides the surface with sufficient contact area to guarantee the necessary interference between the outer wall of the socket (2) and the inner wall of the tube (1), eliminating unintentional relative displacement thereof.

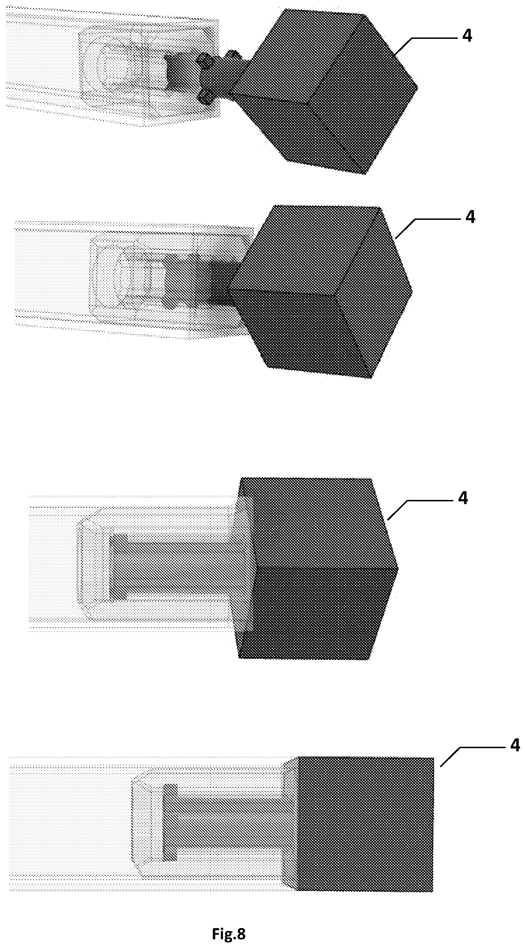

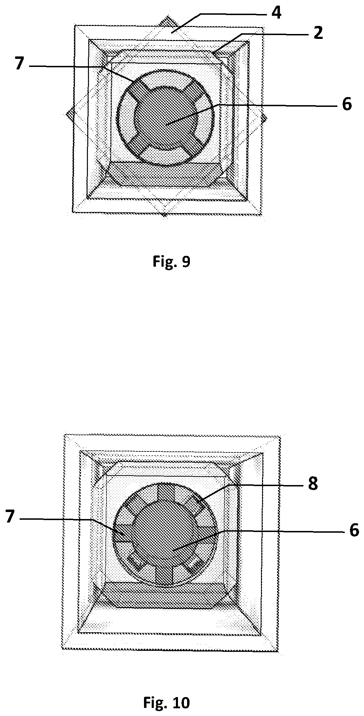

In a preferred embodiment, the socket (2) comprises a cavity, embedded into the compact body of the socket, for insertion of the studs (6) of the vertex cubic connector, wherein said cavity comprises grooves (8) for inserting the pins (7) located at the end of the studs (6) of the vertex cubic connector (4) after its total linear connection with the socket (2). This cavity comprises grooves (8) for receiving the respective pins (7) of the vertex cubic connector (4). Adjacent to each of these grooves (8) there are bearing surfaces, preferably with a portion composed of smooth flat surfaces which, after rotation of the vertex cubic connector (4) in relation to the socket (2), will stop the translational movement between vertex cubic connector (4) and socket (2) under normal use conditions, as shown in Figure 8, Figure 9 and Figure 10.

In one embodiment, on the bearing surfaces, more preferably after the flat surface, there may be high relief protrusions followed by low relief recesses, which during the rotational movement of the vertex cubic connector (4) on the socket (2) will be overcome by pressure, and will serve as a housing for the pins (7) of the stud (6) of the vertex cubic connector (4), and the protrusions and recesses will ensure rotational locking between the vertex cubic connector (4) and socket (2) under normal use conditions. Following the recesses, stops are arranged which prevent the pins from continuing their rotational movement after 45° rotation of the vertex cubic connector.

In one embodiment, at the end (B) of the socket (2) there is a chamfer on the four interior sides, to guide and facilitate the positioning of the vertex cubic connector with the socket (2) in its coupling initial linear path.

In a preferred embodiment, inside the socket (2), between top A and top B, a cavity and at least 2 channels or grooves are built which are longitudinally uniform and constitute counterparts of the vertex cubic connector stud and the respective pins of the stud, and which guide them, the stud into the cavity, and the pins into the grooves, during their translational movement in the coupling step between vertex cubic connector (4) and the socket (2). The cavity will house more than 80% of the stud of the vertex cubic connector (4) in a stationary condition of the system, providing contact between the compact stud and the compact wall of the socket (2) absorbing the existing flexures under normal use conditions. In a stationary situation after rotation of the vertex cubic connector, the pins will be housed in the bearing surfaces to retain the pins.

In one embodiment, the vertex cubic connector (4) is a monolithic and compact metallic piece, with no recess or other associated components, capable of being produced through different metallic alloys with varied chemical compositions. The vertex cubic connector comprises a cubic central body (5) which may comprise one to six studs (6), each of the studs being located on each of the faces (5) of the central body. The studs (6) are positioned perpendicularly to the faces (5) and their axis located at the central point of the face (5).

In one embodiment, each stud has at the end opposite to the area connecting to the central body, 4 pins (7) of equal dimensions, perpendicular to the axis of the stud, spaced 90° apart.

Figure 12 represents a sectional view of a preferred embodiment, with the vertex cubic connector being inserted into the socket which, in turn, is inserted into a rod.

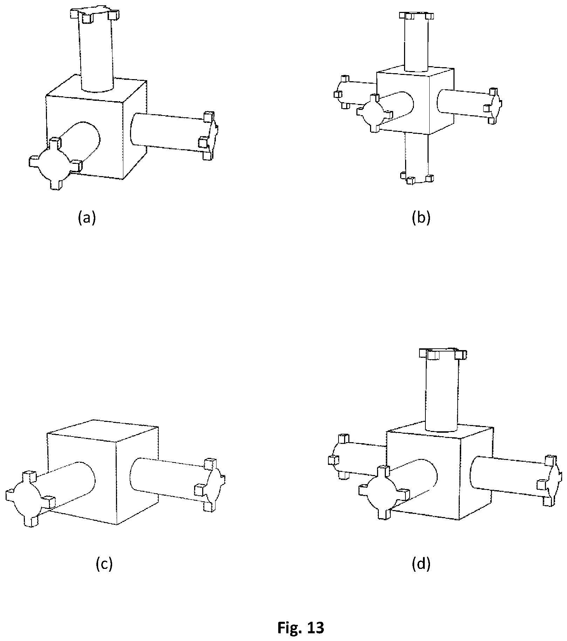

Figure 13 represents the different embodiments of the vertex cubic connector wherein (a) the vertex cubic connector comprises three studs, (b) the vertex cubic connector comprises four studs, (c) the vertex cubic connector comprises two studs and (d) the vertex cubic connector comprises four studs. The number of studs in the vertex cubic connector will depend on the number of rods intended to connect.

In a preferred embodiment, the stud comprises two pins, preferably three pins, more preferably four pins.

In one embodiment, the vertex cubic connector (4) may comprise two studs, which meet on opposite faces.

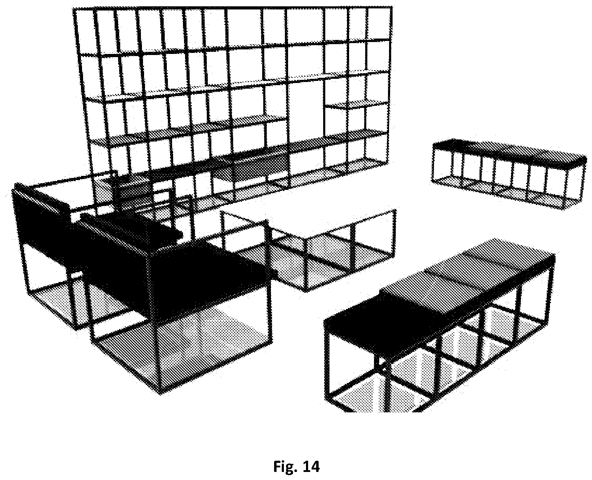

Figure 14 is a representation of several possible embodiments with the described connection system. Figure 14 demonstrates the connection for bookcases, tables, benches, chairs and cabinets. This connection system can be used on other furniture articles.

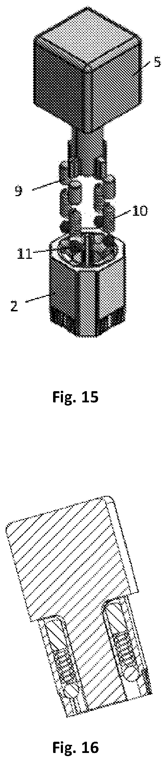

Figure 15 represents an embodiment according to the invention of the system wherein fastening the vertex cubic connector to the socket occurs with the aid of balls and springs. In said figure, (2) represents the socket; (5) represents the central body of the vertex cubic connector; (9) represents the bearing; (10) represents the axial spring; (11) represents the ball.

Figure 16 represents a sectional view of an embodiment according to the invention of the system with the balls, wherein the balls (11) axially arranged; the spring (10) axially arranged and the bearings (9) are visible. It can be seen that, after the rotation of the vertex cubic connector, the bearings (9) come into contact with the central body of the connector and the balls stop the rotation between the vertex cubic connector and the socket.

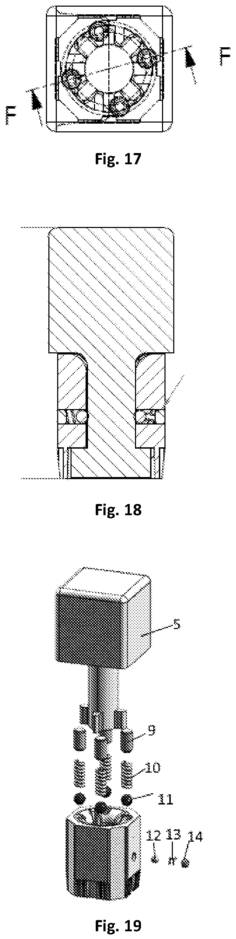

Figure 17 shows an embodiment of the insertion of the socket inside a rod.

Figure 18 represents a sectional view of an embodiment according to the invention of the system with the balls and springs arranged radially in the socket. The springs are arranged radially, in a position of compression by the action of the ball that is in contact with the stud of the vertex cubic connector.

Figure 19, in an exploded view, represents an embodiment according to the invention of the system wherein fastening the vertex cubic connector to the socket occurs with the aid of balls and springs. In said figure, (2) represents the socket; (4) represents the vertex cubic connector; (5) represents a cubic central body; (9) represents the bearing; (10) represents the axial spring; (11) represents the ball axially arranged; (12) represents the ball radially arranged; (13) represents the spring radially arranged to be compressed by the action of the ball radially arranged in the socket and (14) represents a cap.

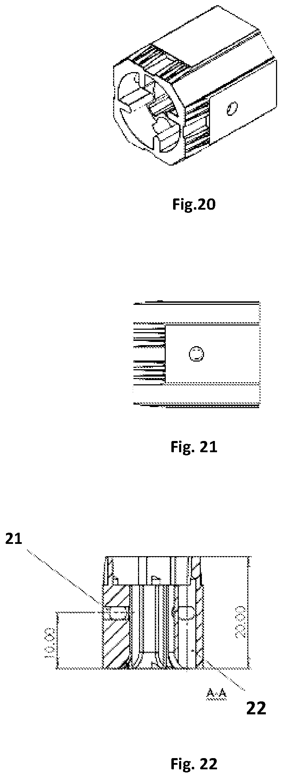

Figure 20 represents an embodiment of the socket, the hole that will receive the spring arranged to compress by the action of the radial ball being visible. Figure 21 represents a side view of an embodiment of the socket, the hole that will receive the spring arranged to compress by the action of the radial ball being visible. Figure 22 represents an embodiment of the system inserted inside the rod and the detail of the radial and/or axial holes each used to house the ball and spring.

The term "comprises" or "comprising" when used herein is intended to indicate the presence of the features, elements, integers, steps and components mentioned, but does not preclude the presence or addition of one or more other features, elements, integers, steps and components, or groups thereof. The present invention is of course in no way restricted to the embodiments described herein and a person of ordinary skill in the art can foresee many possibilities of modifying it and replacing technical features with equivalents depending on the requirements of each situation as defined in the appended claims. The following claims define additional embodiments of the present description.

## Claims

1. Connection system comprising at least one vertex cubic connector (4), at least one socket (2) with a cavity for receiving a stud (6) of said connector, and at least one rod with a hollow end for receiving and fastening said socket (2), in direct and continuous longitudinal contact between the socket (2) and the hollow end of the rod;
wherein the vertex cubic connector (4) comprises at least one stud for inserting and rotating within said cavity;
wherein said stud (6) protrudes from a cube face of said cubic connector (4);
wherein said stud (6) comprises one or more pins (7) at an end distal to said face;
wherein said pins extend radially from said stud (6);
wherein said socket comprises longitudinal grooves (8) arranged in the cavity so that said pins (7) slide therein and wherein the grooves (8) terminate in bearing surfaces to hold the pins when the stud (6) is rotated relative to the socket (2);
wherein the socket (2) and the stud (6) are configured so that said face abuts directly against the end of the rod when the cubic connector is assembled in the socket and the socket is assembled in the rod;
**characterised in that**,
the socket (2) comprises at least one ball (11, 12) and one spring (10,13) arranged axially, and/or radially, to compress the ball (11,12) against a pin (3) of the vertex cubic connector to retain the pin (3) after the pin (3) has passed through the ball (11, 12), to stop the rotation of the connector with respect to the socket.

2. Connection system according to the preceding claim, wherein said socket (2) comprises one or more longitudinal notches for direct and continuous contact with said hollow, along said socket.

3. Connection system according to any one of the preceding claims, wherein the stud (6) is cylindrical.

4. Connection system according to any one of the preceding claims, wherein the rods are hollow tubes or solid rods with hollow ends for receiving said socket (2).

5. Connection system according to any one of the preceding claims, wherein the bearing (9) surface comprises a flat surface, which is followed by a protrusion, which is followed by a recess, which is followed by a stop, to retain the respective pin after passing through the protrusion, when the stud (6) is inserted and rotated within said cavity of the socket (2).

6. Connection system according to any one of the preceding claims, wherein the socket (2) comprises one or more axial openings, each one for receiving a ball (11) and a spring (10), and/or the socket (2) comprises one or more radial openings, each one for receiving a ball (12) and a spring (13).

7. Connection system according to any one of the preceding claims, wherein the cavity is a hole through the socket (2).

8. Connection system according to any one of the preceding claims, wherein the stud (6) comprises two pins, preferably three pins, more preferably four pins.

9. Connection system according to any one of the preceding claims, wherein the vertex cubic connector is a monolithic component and/or wherein the socket (2) is a monolithic component.

10. Connection system according to any one of the preceding claims, wherein the socket and the vertex cubic connector (4) are made of metal.

11. Connection system according to any one of the preceding claims, wherein the cubic connector (4) is for a joining apex of two rods at 90° or 180° to each other, and wherein said cubic connector comprises two studs at 90° or 180° to each other, each of which protrudes from a respective cube face of said cubic connector and/or wherein the cubic connector (4) is for a joining apex of three rods at 90° to each other, and wherein said cubic connector comprises three studs at 90° to each other, each of which protrudes from a respective cube face of said cubic connector or wherein the cubic connector is for a joining apex of four rods at 90° to each other, and wherein said cubic connector (4) comprises four studs at 90° to each other, each of which protrudes from a respective cube face of said cubic connector or wherein the cubic connector is for a joining apex of five rods at 90° to each other, and wherein said cubic connector comprises five studs at 90° to each other, each of which protrudes from a respective cube face of said cubic connector or wherein the cubic connector (4) is for a joining apex of six rods at 90° to each other, and wherein said cubic connector comprises six studs at 90° to each other, each of which protrudes from a respective cube face of said cubic connector.

12. Method of assembling the connection system according to the preceding claims, comprising the following steps:
inserting the socket (2) translationally into a rod with a hollow at one end of the rod and fasten said socket (2);
inserting the cubic connector stud into the cavity of the socket (2) and the pins into the longitudinal grooves of said cavity of the socket (2);
abutting the cube face of the cubic connector (4) on the socket (2) and rotating to fasten the cubic connector (4).

13. Method according to the preceding claim, wherein the cubic connector rotates 45°.

14. Structure comprising the connection system according to any claims 1 to 11 wherein the structure is a furniture article, preferably the structure is a bookcase, a table, or a cabinet.

15. Method of manufacturing the connection system according to any claims 1 to 11, comprising the step of forming said socket (2).

## Patentansprüche

1. Verbindungssystem, umfassend mindestens einen würfelförmigen Eckverbinder (4), mindestens eine Buchse (2) mit einem Hohlraum zur Aufnahme eines Bolzens (6) des genannten Verbinders und mindestens eine Stange mit einem hohlen Ende zur Aufnahme und Befestigung der genannten Buchse (2) in direktem und kontinuierlichem Längskontakt zwischen der Buchse (2) und dem hohlen Ende der Stange;
wobei der würfelförmige Eckverbinder (4) mindestens einen Bolzen zum Einsetzen und Drehen in dem genannten Hohlraum aufweist;
wobei der genannte Bolzen (6) aus einer Würfelseite des genannten würfelförmigen Verbinders (4) herausragt;
wobei der genannte Bolzen (6) einen oder mehrere Stifte (7) an einem von der genannten Seite entfernten Ende aufweist;
wobei die genannten Stifte radial von dem genannten Bolzen (6) abstehen;
wobei die genannte Buchse Längsnuten (8) umfasst, die in dem Hohlraum so angeordnet sind, dass die genannten Stifte (7) in diesen gleiten, und wobei die Nuten (8) in Auflageflächen enden, um die Stifte zu halten, wenn der Bolzen (6) relativ zu der Buchse (2) gedreht wird;
wobei die Buchse (2) und der Bolzen (6) so konfiguriert sind, dass die genannte Fläche direkt an das Ende der Stange anstößt, wenn der würfelförmige Verbinder in der Buchse und die Buchse in der Stange montiert ist;
**dadurch gekennzeichnet, dass** die Buchse (2) mindestens eine Kugel (11, 12) und eine Feder (10, 13) umfasst, die axial und/oder radial so angeordnet ist, dass die Kugel (11, 12) gegen einen Stift (3) des würfelförmigen Eckverbinders gedrückt wird, um den Stift (3) zurückzuhalten, nachdem der Stift (3) durch die Kugel (11, 12) hindurchgeführt worden ist, um die Drehung des Verbinders in Bezug auf die entsprechende Buchse zu unterbrechen.

2. Verbindungssystem nach dem vorangehenden Anspruch, wobei die genannte Buchse (2) eine oder mehrere Längskerben für einen direkten und kontinuierlichen Kontakt mit dem genannten Hohlraum entlang der genannten Buchse aufweist.

3. Verbindungssystem nach einem der vorangehenden Ansprüche, wobei der Bolzen (6) zylinderförmig ist.

4. Verbindungssystem nach einem der vorangehenden Ansprüche, wobei die Stangen hohle Rohre oder massive Stangen mit hohlen Enden zur Aufnahme der genannten Buchse (2) sind.

5. Verbindungssystem nach einem der vorangehenden Ansprüche, wobei die Auflagefläche (9) eine ebene Fläche aufweist, auf die ein Vorsprung folgt, auf den eine Aussparung folgt, auf die ein Anschlag folgt, um den entsprechenden Stift nach dem Durchführen durch den Vorsprung zurückzuhalten, wenn der Bolzen (6) in den genannten Hohlraum der Buchse (2) eingesetzt und gedreht wird.

6. Verbindungssystem nach einem der vorangehenden Ansprüche, wobei die Buchse (2) eine oder mehrere axiale Öffnungen aufweist, um jeweils eine Kugel (11) und eine Feder (10) aufzunehmen, und/oder die Buchse (2) eine oder mehrere radiale Öffnungen aufweist, um jeweils eine Kugel (12) und eine Feder (13) aufzunehmen.

7. Verbindungssystem nach einem der vorangehenden Ansprüche, wobei der Hohlraum eine Öffnung durch die Buchse (2) ist.

8. Verbindungssystem nach einem der vorangehenden Ansprüche, wobei der Bolzen (6) zwei Stifte, bevorzugt drei Stifte, besonders bevorzugt vier Stifte umfasst.

9. Verbindungssystem nach einem der vorangehenden Ansprüche, wobei der würfelförmige Eckverbinder ein monolithisches Bauteil ist und/oder wobei die Buchse (2) ein monolithisches Bauteil ist.

10. Verbindungssystem nach einem der vorangehenden Ansprüche, wobei die Buchse und der würfelförmige Eckverbinder (4) aus Metall gefertigt sind.

11. Verbindungssystem nach einem der vorangehenden Ansprüche, wobei der würfelförmige Verbinder (4) für ein Verbindungsende zweier Stangen in einem Winkel von 90° oder 180° zueinander vorgesehen ist, und wobei der genannte würfelförmige Verbinder zwei in einem Winkel von 90° oder 180° zueinander stehende Bolzen umfasst, von denen jeder aus einer entsprechenden Würfelseite des genannten würfelförmigen Verbinders herausragt, und/oder wobei der würfelförmige Verbinder (4) für ein Verbindungsende dreier in einem Winkel von 90° zueinander stehenden Stangen vorgesehen ist, und wobei der genannte würfelförmige Verbinder drei in einem Winkel von 90° zueinander stehende Bolzen umfasst, von denen jeder aus einer entsprechenden Würfelseite des genannten würfelförmigen Verbinders herausragt, oder wobei der würfelförmige Verbinder für ein Verbindungsende von vier in einem Winkel von 90° zueinander stehenden Stangen vorgesehen ist, und wobei der genannte würfelförmige Verbinder (4) vier in einem Winkel von 90° zueinander stehende Bolzen umfasst, von denen jeder aus einer entsprechenden Würfelseite des genannten würfelförmigen Verbinders herausragt, oder wobei der würfelförmige Verbinder für ein Verbindungsende von fünf in einem Winkel von 90° zueinander stehenden Stangen vorgesehen ist, und wobei der genannte würfelförmige Verbinder fünf in einem Winkel von 90° zueinander stehende Bolzen umfasst, von denen jeder aus einer entsprechenden Würfelseite des genannten würfelförmigen Verbinders herausragt oder wobei der würfelförmige Verbinder (4) für ein Verbindungsende von sechs in einem Winkel von 90° zueinander stehenden Stangen vorgesehen ist, und wobei der genannte würfelförmige Verbinder sechs in einem Winkel von 90° zueinander stehende Bolzen umfasst, von denen jeder aus einer entsprechenden Würfelseite des genannten würfelförmigen Verbinders herausragt.

12. Verfahren zum Zusammenbau des Verbindungssystems nach einem der vorangehenden Ansprüche, umfassend die folgenden Schritte:
Translatorisches Einführen der Buchse (2) in eine Stange mit einem Hohlraum an einem Ende der Stange und Befestigen der genannten Buchse (2);
Einführen des würfelförmigen Verbindungsbolzens in den Hohlraum der Buchse (2) und der Stifte in die Längsnuten des genannten Hohlraums der Buchse (2);
Aufsetzen der Würfeloberfläche des würfelförmigen Verbinders (4) auf die Buchse (2) und Drehen zur Befestigung des würfelförmigen Verbinders (4).

13. Verfahren nach dem vorangehenden Anspruch, wobei der würfelförmige Verbinder um 45° gedreht wird.

14. Struktur, umfassend das Verbindungssystem nach einem der Ansprüche 1 bis 11, wobei die Struktur ein Möbelstück ist, wobei die Struktur bevorzugt ein Bücherregal, ein Tisch oder ein Schrank ist.

15. Verfahren zur Herstellung des Verbindungssystems nach einem der Ansprüche 1 bis 11, umfassend den Schritt des Formens der genannten Buchse (2).

## Revendications

1. Système de liaisons comprenant au moins un connecteur cubique de sommets (4), au moins une douille (2) avec une cavité destinée à recevoir un goujon (6) dudit connecteur, et au moins une tige avec une extrémité creuse destinée à recevoir et à fixer ladite douille (2), en contact longitudinal direct et continu entre la douille (2) et l'extrémité creuse de la tige ;
dans lequel le connecteur cubique de sommets (4) comprend au moins un goujon destiné à être inséré et pivoté au sein de ladite cavité ;
dans lequel ledit goujon (6) fait saillie d'une face de cube dudit connecteur cubique (4) ; dans lequel ledit goujon (6) comprend une ou plusieurs broches (7) à une extrémité distale de ladite face ;
dans lequel lesdites broches s'étendent radialement à partir dudit goujon (6) ;
dans lequel ladite douille comprend des rainures longitudinales (8) arrangées dans la cavité telles que lesdites broches (7) y coulissent et dans laquelle les rainures (8) se terminent par des surfaces d'appui destinées à maintenir les broches lorsque le goujon (6) est pivoté par rapport à la douille (2) ;
dans lequel la douille (2) et le goujon (6) sont configurés tel que ladite face soit mise en butée directement contre l'extrémité de la tige lorsque le connecteur cubique est assemblé dans la douille et la douille est assemblée dans la tige ;
**caractérisé en ce que** la douille (2) comprend au moins une balle (11, 12) et un ressort (10, 13) arrangés axialement, et/ou radialement, pour comprimer la balle (11, 12) contre une broche (3) du connecteur cubique de sommets pour retenir la broche (3) après que la broche (3) soit passée à travers la balle (11, 12), pour arrêter la rotation du connecteur par rapport à la douille.

2. Système de liaisons selon la revendication précédente, dans lequel ladite douille (2) comprend une ou plusieurs encoches longitudinales pour un contact direct et continu avec ladite cavité, le long de ladite douille.

3. Système de liaisons selon l'une quelconque des revendications précédentes, dans lequel le goujon (6) est cylindrique.

4. Système de liaisons selon l'une quelconque des revendications précédentes, dans lequel les tiges sont des tubes creux ou des tiges solides avec des extrémités creuses destinées à recevoir ladite douille (2).

5. Système de liaisons selon l'une quelconque des revendications précédentes, dans lequel la surface de support (9) comprend une surface plate, qui est suivie d'une saillie, qui est suivie d'un renfoncement, qui est suivi d'un arrêt, pour retenir la broche respective après qu'elle soit passée à travers la saillie, lorsque le goujon (6) est inséré et pivoté au sein de la cavité de la douille (2).

6. Système de liaisons selon l'une quelconque des revendications précédentes, dans lequel la douille (2) comprend une ou plusieurs ouvertures axiales, chacune destinée à recevoir une balle (11) et un ressort (10), et/ou la douille (2) comprend une ou plusieurs ouvertures radiales, chacune destinée à recevoir une balle (12) et un ressort (13).

7. Système de liaisons selon l'une quelconque des revendications précédentes, dans lequel la cavité est un trou à travers la douille (2).

8. Système de liaisons selon l'une quelconque des revendications précédentes, dans lequel le goujon (6) comprend deux broches, préférablement trois broches, plus préférablement quatre broches.

9. Système de liaisons selon l'une quelconque des revendications précédentes, dans lequel le connecteur cubique de sommets est un composant monolithique et/ou dans lequel la douille (2) est un composant monolithique.

10. Système de liaisons selon l'une quelconque des revendications précédentes, dans lequel la douille et le connecteur cubique de sommets (4) sont faits de métal.

11. Système de liaisons selon l'une quelconque des revendications précédentes, dans lequel le connecteur cubique (4) est pour un apex joignant deux tiges à 90° ou 180° l'une de l'autre, et dans lequel ledit connecteur cubique comprend deux goujons à 90° ou 180° l'un de l'autre, chacun desquels fait saillie d'une face de cube respective dudit connecteur cubique et/ou dans lequel le connecteur cubique (4) est pour un apex joignant trois tiges à 90° les unes des autres, et dans lequel ledit connecteur cubique comprend trois goujons à 90° les uns des autres, chacun desquels fait saillie d'une face de cube respective dudit connecteur cubique ou dans lequel le connecteur cubique est pour un apex joignant quatre tiges à 90° les unes des autres, et dans lequel ledit connecteur cubique (4) comprend quatre goujons à 90° les uns des autres, chacun desquels fait saillie d'une face de cube respective dudit connecteur cubique ou dans lequel le connecteur cubique est pour un apex joignant cinq tiges à 90° les unes des autres, et dans lequel ledit connecteur cubique comprend cinq goujons à 90° les uns des autres, chacun desquels fait saillie d'une face de cube respective dudit connecteur cubique ou dans lequel le connecteur cubique (4) est pour un apex joignant six tiges à 90° les unes des autres, et dans lequel ledit connecteur cubique comprend six goujons à 90° les uns des autres, chacun desquels fait saillie d'une face de cube respective dudit connecteur cubique.

12. Procédé d'assemblage du système de liaisons selon les revendications précédentes, comprenant les étapes suivantes :
insérer la douille (2) en translation dans une tige avec une cavité à une extrémité de la tige et attacher ladite douille (2) ;
insérer le goujon de connecteur cubique dans la cavité de la douille (2) et les broches dans les rainures longitudinales de ladite cavité de la douille (2) ;
faire venir la face de cube du connecteur cubique (4) en butée de la douille (2) et pivoter pour attacher le connecteur cubique (4).

13. Procédé selon la revendication précédente, dans lequel le connecteur cubique pivote à 45°.

14. Structure comprenant le système de liaisons selon l'une quelconque des revendications 1 à 11 dans laquelle la structure est un article de mobilier, la structure étant préférablement une bibliothèque, une table, ou un placard.

15. Procédé de fabrication du système de liaisons selon l'une quelconque des revendications 1 à 11, comprenant l'étape consistant à former ladite douille (2).
